# EUROPÄISCHE PATENTSCHRIFT

(11) **EP 2 047 946 B1**
(45) Veröffentlichungstag und Bekanntmachung des Hinweises auf die Patenterteilung: **20.07.2011**
(21) Anmeldenummer: 08016694.5
(22) Anmeldetag: 23.09.2008
(51) Int. Cl.: B23Q 1/48, B23Q 1/66

(54) **Fräs- und Bohrmaschine mit Palettenwechsler**
Milling and drilling machine with palette exchanger
Machine de fraisage et de forage dotée d'un dispositif d'échange de palettes

(30) Priorität: 09.10.2007 DE 202007014117 U
(43) Veröffentlichungstag der Anmeldung: 15.04.2009
(73) Patentinhaber: DECKEL MAHO Pfronten GmbH, 87459 Pfronten (DE)
(72) Erfinder: Jung, Robert, 87459 Pfronten (DE)
(74) Vertreter: Erny, Tobias

(56) Entgegenhaltungen:
- DE-A1- 19 853 945

## Beschreibung

Die Erfindung betrifft eine programmgesteuerte Fräs- und Bohrmaschine mit einem ortsfesten Maschinenständer mit einer an der Frontseite des Maschinenständers in mindestens einer Koordinatenachse verfahrbaren Bearbeitungseinheit mit einem Fräskopf, mit einem vor dem Maschinenständer angeordneten Maschinenbett, mit einem auf dem Maschinenbett in einer Koordinatenachse verfahrbaren Werkstückträger und mit einem am Endteil des Maschinenbetts angeordneten Palettenwechsler, der zwei Palettenhalter und einen Dreh- und Hubmechanismus aufweist (siehe, z.B., DE-198 53 945-A).

Programmgesteuerte Fräs- und Bohrmaschinen sind zur Serienbearbeitung von Werkstücken häufig mit Palettenwechslern ausgestattet, die einen kurzzeitigen Austausch der Werkstücke ermöglichen und damit die Spanleistung bei verminderten Totzeiten vergrößern. Die Paletten werden außerhalb der Werkzeugmaschine mit Werkstücken bestückt und auf oder an einem Palettenträger eines Palettenwechslers lösbar befestigt. Bei dem hier angesprochenen Typ des Palettenwechslers erfolgt die Befestigung einer Palette durch eine Absenkbewegung und den dadurch erzielten Eingriff eines haken- bzw. klauenförmigen Palettenträgers in eine entsprechende Ausnehmung am Außenrand der Palette. Durch eine Drehbewegung des Palettenwechslers wird die Palette über dem Werkstücktisch positioniert und nach einer Absenkbewegung auf diesem Tisch gespannt. Bei den bisher verwendeten Palettenwechslern befindet sich der Hubmechanismus zum Anheben und Absenken der Paletten innerhalb der Schutzkabine der Werkzeugmaschine, was zur Folge hat, dass die Einzelteile des Hubmechanismus durch die im Kabineninneren befindlichen Arbeitsflüssigkeiten und Späne verschmutzen können. Späneablagerungen auf den relativbeweglichen Teilen des Hub- und Drehmechanismus können Anlass für Betriebsstörungen und Ausfallerscheinungen sein. Ausfälle der Palettenwechsler führen im mannlosen Schichtbetrieb zwangsläufig zu Ausfällen der gesamten Maschine.

Aufgabe der Erfindung ist es, eine programmgesteuerte Fräs- und Bohrmaschine mit einem Palettenwechsler zu schaffen, bei welcher der Palettenwechsler dem Einfluss des Spänefalls und von Verschmutzungen durch Flüssigkeiten entzogen ist.

Diese Aufgabe wird erfmdungsgemäß dadurch gelöst, dass das Traggestell des Palettenwechslers seitlich neben dem Maschinenbett angeordnet ist und einen formsteifen stabilen Querarm aufweist, der sich mit vertikalem Abstand über das Maschinenbett quer erstreckt und den Drehmechanismus trägt, und dass der Hubmechanismus in dem seitlichen Traggestell neben dem Maschinenbett gegen Verschmutzung geschützt angeordnet ist.

Durch die seitliche Anordnung des Traggestells des Palettenwechslers wird eine verbesserte Zugangsmöglichkeit zu den Einzelteilen des Palettenwechslers von der hinteren Stirnseite des Maschinenbettes erreicht. Ferner werden die Aggregate des Hubmechanismus aufgrund ihrer seitlichen Anordnung neben dem Maschinenbett und dem Vorsehen einer Schutzwand vor Späneablagerungen und Verunreinigungen durch Flüssigkeiten geschützt. Weiterhin ergeben sich geringere Genauigkeitsanforderungen beim Aufnehmen und Ablegen der Paletten, was den Gesamtbetrieb der Maschine vereinfacht und die Fehlerquote vermindert.

Gemäß einer zweckmäßigen Ausgestaltung der Erfindung enthält der Hubmechanismus des Palettenwechslers Vertikalführungen und mindestens einen Druckmittelzylinder zum Anheben und Absenken des Querarms, wobei die Führungselemente und der bzw. die Druckmittelzylinder in dem an einer Seitenwand des Maschinenbettes befestigten Traggestell angeordnet sind, und zwar zusammen mit einem Steueraggregat für die Zu- und Abfuhr des Druckmittels.

Zweckmäßig ist nur ein einziger Hubmechanismus mit Vertikalführungen an einer Seite des Maschinenbettes vorgesehen, der an einem Ende des Querarms angreift. Dadurch ragt der Querarm etwa bis zur Mitte des Maschinenbettes. Bei diesem Ausführungsbeispiel sind der Palettenträger und sein Drehantrieb am freien Endteil des Querträgers montiert.

Ein anderes vorteilhaftes Ausführungsbeispiel der Erfindung zeichnet sich dadurch aus, dass der Querarm das Maschinenbett brückenartig überspannt und mit jedem Ende an je einem seitlich neben dem Maschinenbett angeordneten Hubmechanismus abgestützt ist. Jeder dieser beiden Hubmechanismen enthält zweckmäßig Vertikalführungen und einen Druckmittelzylinder, die über ein Steueraggregat synchron betrieben werden, sodass der brückenartige Querträger zusammen mit dem darauf gelagerten Palettenträger und dessen Drehantrieb gleichmäßig geführt und ohne Verkippen angehoben und abgesenkt werden.

Um Ablagerungen von Spänen und Verschmutzungen der Hubmechanismen auszuschließen, ist vorteilhaft jeder Hubmechanismus von einem Schutzgehäuse umgeben, das zur Seite des Maschinenbetts hin vom Querarm abgedichtet durchragt wird. Die dem Maschinenbett zugekehrte Wand des Schutzgehäuses enthält bewegliche Wandelemente, welche den Querarm dicht umschließen und dessen Hub- und Absenkbewegungen mitmachen.

Weitere Vorzüge und Besonderheiten der erfindungsgemäßen Fräs- und Bohrmaschine und ihres Palettenwechslers lassen sich der folgenden Beschreibung von Ausführungsbeispielen anhand der Zeichnung entnehmen. Es zeigen:
- Fig. 1: wesentliche Bauteile einer Fräs- und Bohrmaschine mit einem erfindungsgemäßen Palettenwechsler in schematischer perspektivischer Darstellung;
- Fig. 2: die Fräs- und Bohrmaschine mit dem Palettenwechsler nach Fig. 1 in einer anderen perspektivischen Darstellung;
- Fig. 3: den Palettenwechsler der Fräs- und Bohrmaschine nach Fig. 1 in perspektivischer Darstellung;
- Fig. 4: ein anderes Ausführungsbeispiel des Palettenwechslers in perspektivischer Darstellung.

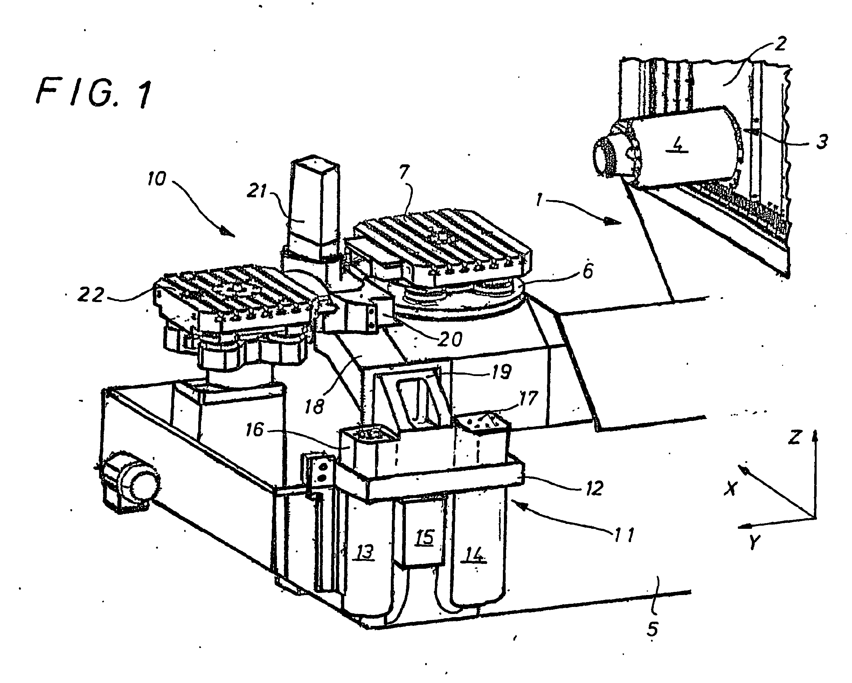

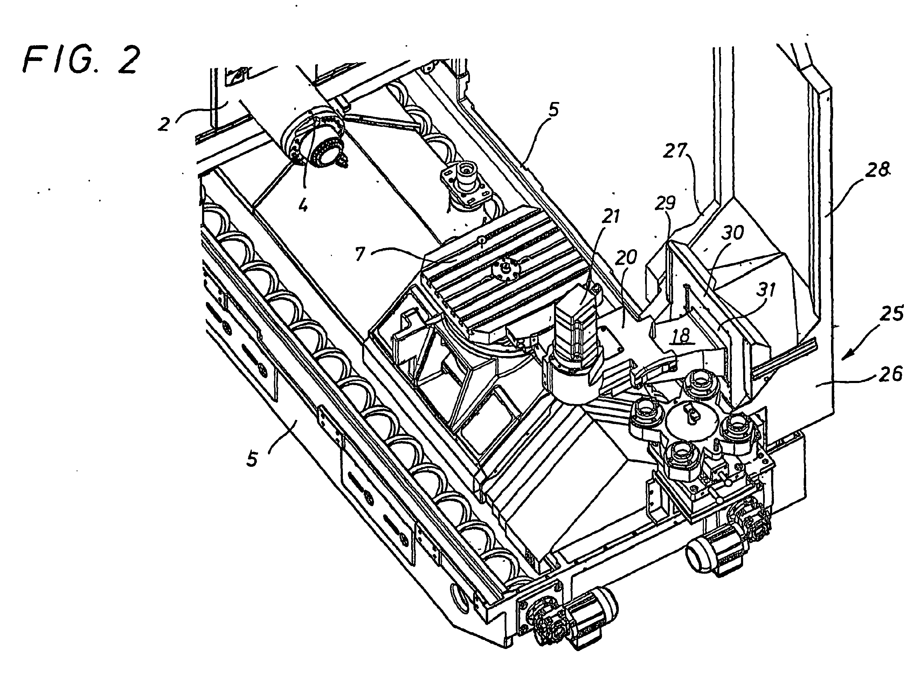

Die in den Figuren 1 und 2 dargestellte Fräs- und Bohrmaschine enthält einen - hier nicht im Einzelnen dargestellten - Maschinenständer 1, an dessen von Blechrahmen 2 abgedeckter Vorderseite eine Bearbeitungseinheit 3 mit einem hier horizontalen Fräskopf 4 angeordnet ist. Die Bearbeitungseinheit 3 ist mittels motorisch angetriebener Schlitten in den X- und Y-Koordinatenachsen verfahrbar. Vor dem Maschinengestell 1 ist ein Maschinenbett 5 angeordnet, auf dem sich ein Werkzeugträger 6 mit einer Werkstückpalette 7 befindet. Der Werkstückträger 6 ist zusammen mit der Palette 7 in Längsrichtung des Bettes, d.h. in der Y-Koordinatenachse, motorisch verfahrbar.

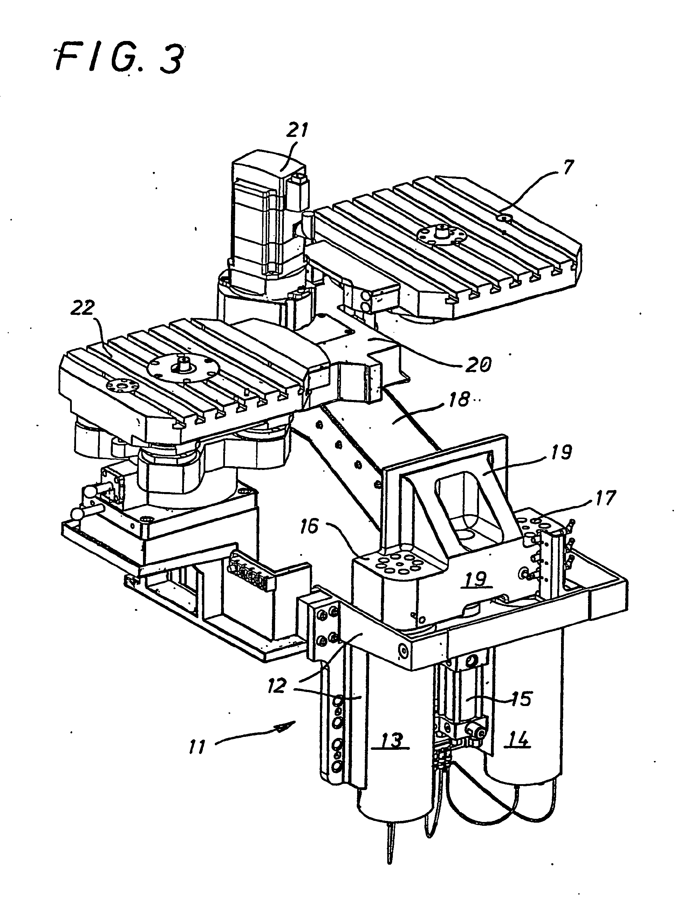

An dem in Fig. 1 linken Endteil des Bettes 5 ist ein Palettenwechsler 10 vorgesehen, der im Folgenden ausführlicher beschrieben wird. Der in Fig. 1 bis 3 im Einzelnen dargestellte Palettenwechsler enthält einen Hubmechanismus 11, der an einer Seitenwand des Maschinenbettes 5 angeordnet ist und ein Traggestell 12 enthält. In diesem an der Seitenwand des Maschinenbettes befestigten Traggestell 12 sind zwei zylindrische Vertikalführungen 13, 14 gehalten, die vertikal und parallel nebeneinander zur Seitenwand des Maschinenbettes ausgerichtet sind. Zwischen den beiden Vertikalführungen 13, 14 ist ein Druckmittelzylinder 15 vorgesehen, dessen Zu- und Ableitung von Druckmittel über die Programmsteuerung der Fräsmaschine gesteuert wird. Mit den heb- und senkbaren Oberteilen 16, 17 der Vertikalführungen 13, 14 ist ein formsteifer Querarm 18 von etwa rechteckigem Querschnitt über einen Anschlussteil 19 fest verbunden, sodass der Querarm 18 von den beiden Oberteilen 16, 17 bei Druckbeaufschlagung des Druckmittelzylinders angehoben und abgesenkt wird. Am freien Ende dieses Querarms ist ein Palettenträger 20 um eine Hochachse verdrehbar montiert, der von einem elektrischen Antriebsmotor 21 verdreht werden kann. Dieser E-Motor 21 ist ebenfalls am freien Ende des Querarms 18 montiert. Der Palettenträger 20 weist an zwei gegenüberliegenden Seiten je einen Traghaken auf, der zum Eingriff in eine entsprechende Ausnehmung an der jeweiligen Palette 7, 22 ausgebildet ist. Wie aus Fig. 1 ersichtlich ist an jedem der beiden - nicht dargestellten - Traghaken des Palettenträgers je eine Palette 7 bzw. 22 befestigt, wobei diese beiden Paletten 7, 22 in Richtung der Y-Koordinatenachse seitlich gegeneinander versetzt sind, wodurch sich die Längserstreckung des Palettenwechslers vermindert.

Wie aus Fig. 2 ersichtlich, ist der in Fig. 1 dargestellte Hubmechanismus 11 in einem geschlossenen Gehäuse 25 untergebracht und dadurch gegen Ablagerungen von Spänen und Flüssigkeiten geschützt. Dieses Gehäuse 25 befindet sich zweckmäßig innerhalb der - nicht dargestellten - Schutzkabine der Fräs- und Bohrmaschine oder bildet einen Teil dieser Schutzkabine. Das Gehäuse 25 enthält Seitenwände 26, 27, eine erhöhte Rückwand 28 sowie zum Maschinenbett 5 hin eine Schutzwand 29, die mindestens ein von dem Querträger 18 durchragtes Wandelement 31 enthält, das den Querträger 18 dicht umschließt und dessen Vertikalbewegungen mitmacht. Dieses Wandelement 31 ist vertikal beweglich und gegenüber den anderen angrenzenden Wandteilen jalousieartig ausgebildet und in jeder Stellung abgedichtet.

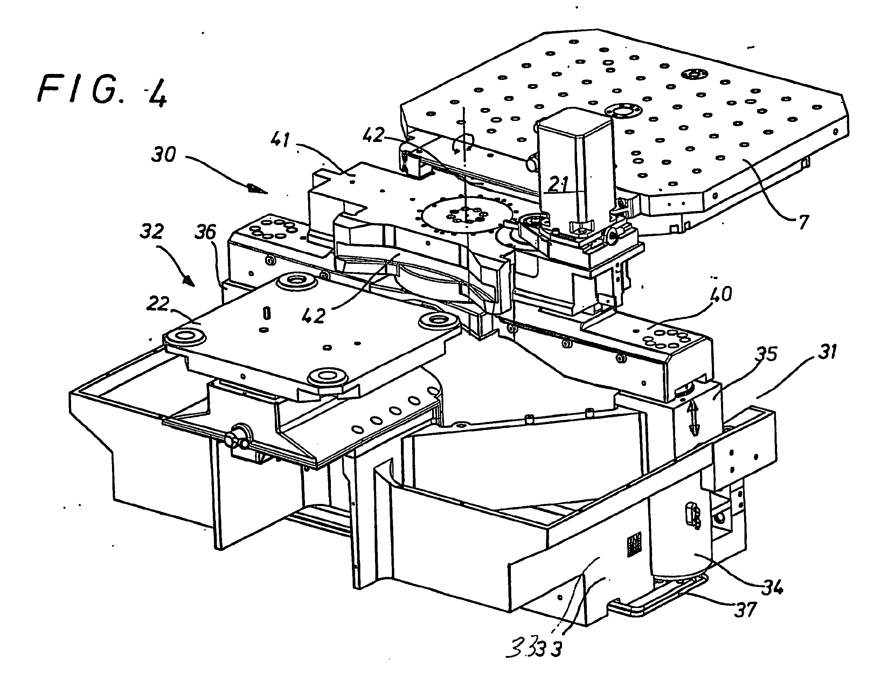

Bei dem in Fig. 4 dargestellten Ausführungsbeispiel des erfmdungsgemäßen Palettenwechslers sind gleiche Bauteile wie beim Ausführungsbeispiel nach Fig. 1 bis 3 mit den gleichen Bezugszeichen versehen. Der Palettenwechsler 30 nach Fig. 4 enthält zwei Hubmechanismen 31, 32, von denen jeweils einer an einer Längsseite des Maschinenbetts angeordnet ist. Beide Hubmechanismen 31, 32 sind baugleich und enthalten ein Traggestell 33 mit Vertikalführungen und einem darin befestigten Druckmittelzylinder 34. Der Oberteil 35, 36 der jeweiligen Druckmittelzylinder führt die vertikalen Hub- und Absenkbewegungen aus, wenn dem jeweiligen Zylinder Druckmittel über die Leitungen 37 zugeführt wird. Auf dem Oberteil 35, 36 jedes Druckmittelzylinders 34 ist ein formsteifer Querträger 40 jeweils endseitig abgestützt, auf dem ein Palettenträger 41 mit zwei gegenüberliegenden Palettenhaltern 43, 44 drehbar angeordnet ist. Zum Verdrehen des Palettenträgers dient auch bei diesem Ausführungsbeispiel ein auf dem Palettenträger montierter Elektromotor 21.

Auch bei diesem Ausführungsbeispiel sind die beiden Hubmechanismen 31, 32 seitlich neben dem Maschinenbett und damit außerhalb des Arbeitsraums der Fräsmaschine angeordnet, sodass sie gegen Verschmutzungen durch Späne und Flüssigkeiten geschützt sind. Zum Zwecke des weitestgehenden Schutzes vor Verschmutzungen sind auch bei diesem Ausführungsbeispiel Schutzwände zwischen dem Maschinenbett und den Hubmechanismen 31, 32 vorgesehen, die an der dem Maschinenbett zugekehrten Seite vertikal verschiebbare Wandelemente haben, welche den Endteil des Querträgers 40 dicht umschließen.

Die Erfindung ist nicht auf die dargestellten Ausführungsbeispiele beschränkt. So können auch andere Konstruktionen von Schutzwänden bzw. Schutzmechanismen eingesetzt werden, um Ablagerungen von Spänen und Flüssigkeiten an den Hubmechanismen sicher zu verhindern.

## Patentansprüche

1. Programmgesteuerte Fräs- und Bohrmaschine mit
- einem Maschinenständer (1),
- einer an der Frontseite des Maschinenständers in mindestens einer Koordinatenachse (X, Z) verfahrbaren Bearbeitungseinheit (3) mit einem Fräskopf (4),
- einem vor dem Maschinenständer angeordneten Maschinenbett (5),
- einem auf dem Maschinenbett (5) in einer weiteren Koordinatenachse (Y) verfahrbaren Werkstückträger (6) und
- einem am freien Endteil des Maschinenbetts (5) angeordneten Palettenwechsler (10), der an einem gemeinsamen Traggestell (12) zwei voneinander beabstandete Palettenhalter sowie einen Dreh- und Hubmechanismus (11, 21) aufweist,
**dadurch gekennzeichnet, dass**
- das Traggestell (12) des Palettenwechslers (10) seitlich neben dem Maschinenbett (5) angeordnet ist und einen formsteifen stabilen Querarm (18) aufweist, der sich über das Maschinenbett (5) erstreckt und den Drehmechanismus (21) trägt, und
- der Hubmechanismus (11) in dem seitlich neben dem Maschinenbett (5) angeordneten Traggestell (12) gegen Verschmutzung durch eine Spritzwand (29) geschützt angeordnet ist.

2. Fräs- und Bohrmaschine nach Anspruch 1,
**dadurch gekennzeichnet, dass**
der Hubmechanismus (11) des Palettenwechslers (10) Vertikalführungen (13, 14) und mindestens einen Druckmittelzylinder zum Anheben und Absenken des Querarms (18, 40) aufweist.

3. Fräs- und Bohrmaschine nach Anspruch 2,
**dadurch gekennzeichnet, dass**
der mindestens eine Druckmittelzylinder in dem an einer Seitenwand des Maschinenbetts (5) befestigten Traggestell angeordnet ist.

4. Fräs- und Bohrmaschine nach einem der vorstehenden Ansprüche,
**dadurch gekennzeichnet, dass**
ein Hubmechanismus (11) mit zwei parallelen Vertikalführungen (13, 14) und einem Druckmittelzylinder (15) an einer Seite des Maschinenbetts (5) vorgesehen ist, die über ein formsteifes Konstruktionselement (19) an einem Ende des Querarms angreifen, und dass der Palettenträger (20) und sein Drehantrieb am freien Endteil des Querträgers (18) angeordnet sind.

5. Fräs- und Bohrmaschine nach einem der Ansprüche 1-3,
**dadurch gekennzeichnet, dass**
der Querarm (40) das Maschinenbett (5) brückenartig überspannt und mit jedem Ende an je einem seitlich neben dem Maschinenbett (5) angeordneten Hubmechanismus (31, 32) abgestützt ist.

6. Fräs- und Bohrmaschine nach einem der vorstehenden Ansprüche,
**dadurch gekennzeichnet, dass**
der Drehmechanismus einen Elektromotor (21) enthält, der mit vertikaler Drehachse auf dem Palettenträger montiert ist.

7. Fräs- und Bohrmaschine nach einem der vorstehenden Ansprüche,
**dadurch gekennzeichnet, dass**
der Palettenträger (20) zwei entgegengesetzte hakenförmige Palettenhalter zur lösbaren Halterung je einer Palette (7, 22) aufweist.

8. Fräs- und Bohrmaschine nach einem der vorstehenden Ansprüche,
**dadurch gekennzeichnet, dass**
der Hubmechanismus (11) von einem Schutzgehäuse (25) umgeben ist, dessen eine Seitenwand (29) zur Seite des Maschinenbetts (5) hin vom Querarm (18, 40) durchragt wird.

9. Fräs- und Bohrmaschinen nach Anspruch 8,
**dadurch gekennzeichnet, dass**
die dem Maschinenbett (5) zugekehrte Wand (29) des Schutzgehäuses (25) bewegliche Wandelemente (30, 31) enthält, welche den Querarm (18, 40) dicht umschließen und gegen angrenzende Wandteile abgedichtet sind.

## Claims

1. Program-controlled milling and drilling machine having
- a machine column (1),
- a machining unit (3) which can travel on the front side of the machine column on at least one coordinate axis (X, Z) and has a milling head (4),
- a machine bed (5) disposed in front of the machine column,
- a workpiece support (6) which can travel on the machine bed (5) on a further coordinate axis (Y), and
- a pallet exchanger (10) which is disposed on the free end portion of the machine bed (5) and has two mutually spaced pallet holders and a rotating and lifting mechanism (11, 21) on a common support frame (12)
**characterised in that**
- the support frame (12) of the pallet exchanger (10) is disposed at the side of the machine bed (5) and has a dimensionally rigid, stable transverse arm (18) extending across the machine bed (5) and supporting the rotating mechanism (21), and
- the lifting mechanism (11) is disposed in the support frame (12), disposed at the side of the machine bed (5), in such a way as to be protected against dirt by a splashboard (29).

2. Milling and drilling machine as claimed in claim 1, **characterised in that** the lifting mechanism (11) of the pallet exchanger (10) has vertical guides (13, 14) and at least one pressure medium cylinder for raising and lowering the transverse arm (18, 40).

3. Milling and drilling machine as claimed in claim 2, **characterised in that** the at least one pressure medium cylinder is disposed in the support frame attached to a sidewall of the machine bed (5).

4. Milling and drilling machine as claimed in any one of the preceding claims, **characterised in that** a lifting mechanism (11) having two parallel vertical guides (13, 14) and a pressure medium cylinder (15) is provided at one side of the machine bed (5), which act on one end of the transverse arm via a dimensionally rigid structural element (19), and that the pallet support (20) and its rotary drive are disposed on the free end portion of the transverse support (18).

5. Milling and drilling machine as claimed in any one of claims 1-3, **characterised in that** the transverse arm (40) straddles the machine bed (5) in a bridge-like manner and is supported at each end on a respective lifting mechanism (31, 32) disposed at the side of the machine bed (5).

6. Milling and drilling machine as claimed in any one of the preceding claims, **characterised in that** the rotating mechanism contains an electric motor (21) which is mounted on the pallet support with its axis of rotation in the vertical direction.

7. Milling and drilling machine as claimed in any one of the preceding claims, **characterised in that** the pallet support (20) has two opposing hook-shaped pallet holders for releasably holding a respective pallet (7, 22).

8. Milling and drilling machine as claimed in any one of the preceding claims, **characterised in that** the lifting mechanism (11) is surrounded by a protective housing (25), one sidewall (29) of which has the transverse arm (18, 40) protruding through it towards the side of the machine bed (5).

9. Milling and drilling machine as claimed in claim 8, **characterised in that** the wall (29) of the protective housing (25) facing the machine bed (5) contains moveable wall elements (30, 31) which closely surround the transverse arm (18, 40) and are sealed with respect to adjoining wall parts.

## Revendications

1. Perceuse - fraiseuse à commande numérique, comprenant
- un bâti de machine (1),
- une unité d'usinage (3) pouvant être déplacée sur la face frontale du bâti de machine sur au moins un axe des coordonnées (X, Z) et comprenant une tête de fraisage (4),
- un banc de machine (5) disposé à l'avant du bâti de machine,
- un porte-pièce (6) pouvant être déplacé sur le banc de machine (5) sur un autre axe des coordonnées (Y) et
- un échangeur de palettes (10) disposé sur la partie terminale libre du banc de machine (5) et qui présente deux systèmes de fixation pour palettes situés à une certaine distance l'un de l'autre et un mécanisme de rotation et de levage (11, 21) sur un châssis commun (12),
**caractérisée en ce que**
- le châssis (12) de l'échangeur de palettes (10) est disposé sur un côté du banc de machine (5) et présente un bras transversal (18) stable et de forme rigide qui s'étend au-dessus du banc de machine (5) et qui porte le mécanisme de rotation (21), et
- le mécanisme de levage (11) est disposé dans le châssis (12), lui-même disposé sur un côté du banc de machine (5), de manière à être protégé contre les salissures grâce à une paroi garde-boue (29).

2. Perceuse - fraiseuse selon la revendication 1, **caractérisée en ce que** le mécanisme de levage (11) de l'échangeur de palettes (10) présente des guidages verticaux (13, 14) et au moins un cylindre à pression de fluide pour relever et abaisser le bras transversal (18, 40).

3. Perceuse - fraiseuse selon la revendication 2, **caractérisée en ce que** le au moins un cylindre à pression de fluide est disposé dans le châssis fixé sur une paroi latérale du banc de machine (5).

4. Perceuse - fraiseuse selon l'une des revendications précédentes, **caractérisée en ce qu'**un mécanisme de levage (11) comprenant deux guidages verticaux parallèles (13, 14) et un cylindre à pression de fluide (15) est prévu sur une face du banc de machine (5), ceux-ci venant en prise sur un élément de construction (19) de forme rigide à une extrémité du bras transversal et **en ce que** le porte-palettes (20) et son entraînement rotatif sont disposés sur la partie terminale libre du support transversal (18).

5. Perceuse - fraiseuse selon l'une des revendications 1 à 3, **caractérisée en ce que** le bras transversal (40) enjambe le banc de machine (5) à la manière d'un pont et s'appuie à chacune de ses extrémités sur un mécanisme de levage (31, 32) disposé sur un côté du banc de machine (5).

6. Perceuse - fraiseuse selon l'une des revendications précédentes, **caractérisée en ce que** le mécanisme de rotation comprend un moteur électrique (21), qui est monté sur le porte-palettes avec l'axe de rotation à la verticale.

7. Perceuse - fraiseuse selon l'une des revendications précédentes, **caractérisée en ce que** le porte-palettes (20) présente deux systèmes de fixation pour palettes opposés, en forme de crochets, pour la fixation amovible de chaque palette (7, 22).

8. Perceuse - fraiseuse selon l'une des revendications précédentes, **caractérisée en ce que** le mécanisme de levage (11) est entouré d'un boîtier protecteur (25) dont une paroi latérale (29) est traversée par le bras transversal (18, 40) depuis le côté du banc de machine (5).

9. Perceuse - fraiseuse selon la revendication 8, **caractérisée en ce** la paroi (29) du boîtier protecteur (25), faisant face au banc de machine (5), comprend des éléments de paroi mobiles (30, 31), qui entourent fermement le bras transversal (18, 40) et sont rendus étanches par rapport aux parties de parois adjacentes.
